# EUROPÄISCHE PATENTSCHRIFT

(11) **EP 1 759 948 B1**
(45) Veröffentlichungstag und Bekanntmachung des Hinweises auf die Patenterteilung: **27.07.2011**
(21) Anmeldenummer: 06119239.9
(22) Anmeldetag: 21.08.2006
(51) Int. Cl.: B60T 8/40, F04B 53/16

(54) **Kolbenpumpe**
Piston pump
Pompe à piston

(30) Priorität: 06.09.2005 DE 102005042193
(43) Veröffentlichungstag der Anmeldung: 07.03.2007
(73) Patentinhaber: ROBERT BOSCH GMBH, 70442 Stuttgart (DE)
(72) Erfinder: Schuller, Wolfgang, 74389 Cleebronn (DE); Blosch, Georg, 71711 Murr (DE); Schumann, Beate, 74357 Boennigheim (DE); Beling, Horst, 74076 Heilbronn (DE); Zimmermann, Marc, 71720 Oberstenfeld (DE)

(56) Entgegenhaltungen:
- WO-A-99/06695
- DE-A1- 10 346 237
- DE-A1- 19 732 817

## Beschreibung

### Stand der Technik

Die vorliegende Erfindung betrifft eine Kolbenpumpe zur Förderung von Fluiden, welche einen einfachen und verbesserten Aufbau aufweist. Die erfindungsgemäße Kolbenpumpe wird insbesondere in Bremsanlagen von Fahrzeugen mit aktivem Druckaufbau verwendet.

Eine Kolbenpumpe nach den Merkmalen des Oberbegriffs des Anspruchs 1 ist beispielsweise bekannt aus der DE 197 32 817 A1. Diese Kolbenpumpe saugt ein Fluid durch eine radiale Querbohrung im Kolben an und führt das Druckmittel über eine Längsbohrung im Kolben einem Druckraum zu. Ein den Kolben radial umgebendes Filterelement ist dazu vorgesehen Verschmutzungen aus dem angesaugten Fluid zu entfernen. Das bekannte Filterelement ist dazu an der dem Kolben zugewandten Innenseite des Zylinders befestigt und wirkt neben seiner Filterfunktion gleichzeitig als Verliersicherung für den Kolben. Die bekannte Kolbenpumpe lässt sich dadurch als Baugruppe vormontieren und anschließend in ein Gehäuse o.ä. einbauen.

Eine dementsprechende Kolbenpumpe ist auch in der WO 99/06695 A1 offenbart.

### Vorteile der Erfindung

Die erfindungsgemäße Kolbenpumpe zur Förderung von Fluiden gemäß den Merkmalen des Patentanspruchs 1 weist demgegenüber den Vorteil auf, dass sie eine besonders einfache Montage und eine besonders sichere Fixierung des Filterelements an der Innenseite des Zylinders ermöglicht. Dazu weist das Filterelement eine erste Auflaufschräge auf, welche sich mit einer zweiten Auflaufschräge am Kolben der Kolbenpumpe in Kontakt befindet, wenn das Pumpenelement als Baugruppe vormontiert ist, sich jedoch noch nicht in einer endgültigen Montageposition beispielsweise in einer Bremsanlage befindet.

Durch die beiden aneinander anliegenden Auflaufschrägen erhöht sich die Anpresskraft zwischen Filterelement und Zylinder und ein besonders wirksamer Zusammenhalt der vormontierten Baugruppe wird gewährleistet.

Die Unteransprüche zeigen bevorzugte Weiterbildungen der Erfindung.

Die erste Auflaufschräge des Filterelements weist vorzugsweise einen Winkel zwischen 10° und 30°, und insbesondere einen Winkel von ca. 20°, auf.

Bevorzugt ist die zweite Auflaufschräge am Kolben an einem ringförmigen, und radial nach außen vorstehenden Absatz des Kolbens angeordnet.

Der ringförmige vorstehende Absatz des Kolbens mit der zweiten Auflaufschräge ist weiter bevorzugt auch als Anlagefläche für eine Dichtung des Kolbens ausgebildet. Dadurch kann der vorstehende Absatz des Kolbens mehrere Funktionen aufweisen.

Gemäß einer bevorzugten Ausgestaltung der Erfindung ist zwischen dem Zylinder und dem Filterelement eine Rastverbindung ausgebildet. Dadurch kann eine einfache Montage bzw. Demontage des Filterelements am Zylinder ermöglicht werden. Weiterhin kann dadurch sichergestellt werden, dass die Kolbenpumpe im zusammengebauten Zustand sicher als Baugruppe gehandhabt werden kann und vor einer Endmontage nicht auseinander fällt.

Die Rastverbindung zwischen dem Zylinder und dem Filterelement ist vorzugsweise derart gebildet, dass an der Innenseite des Zylinders eine Ausnehmung gebildet ist und am Filterelement ein vorstehendes Rastelement ausgebildet ist, welches im zusammengebauten Zustand in der Ausnehmung angeordnet ist.

Um eine besonders einfache Montage des Filterelements am Innenumfang des Zylinders zu ermöglichen, ist die Ausnehmung im Zylinder an einem sich verjüngenden Bereich des Zylinders, insbesondere an einem konischen Bereich, ausgebildet.

Die erfindungsgemäße Kolbenpumpe wird besonders bevorzugt in einer Bremsanlage für Fahrzeuge, insbesondere in einer Bremsanlage mit einem aktiven Druckaufbau, wie beispielsweise einem ABS-, ESP- und/oder TCS-System verwendet.

### Zeichnung

Nachfolgend wird die Erfindung anhand eines bevorzugten Ausführungsbeispiels in Verbindung mit der Zeichnung beschrieben. In der Zeichnung ist:
- Figur 1: eine schematische Schnittansicht einer Kolbenpumpe in einem eingebauten Zustand,
- Figur 2: eine schematische Schnittansicht der Kolbenpumpe in einem zusammengebauten Zustand als vormontierte Baugruppe, wobei die Kolbenpumpe jedoch noch nicht im Gehäuse eingebaut ist,
- Figur 3: eine schematische Schnittansicht eines in Figur 1 und 2 gezeigten Filterelements,
- Figur 4: eine vergrößerte, schematische Schnittansicht einer Verbindung zwischen Filterelement und Zylinder im montierten Zustand und
- Figur 5: eine schematische, vergrößerte Ansicht der Verbindung zwischen dem Zylinder und dem Filterelement im zusammengebauten Zustand der Kolbenpumpe, welche jedoch noch nicht in einem Gehäuse montiert ist.

### Beschreibung des Ausführungsbeispiels

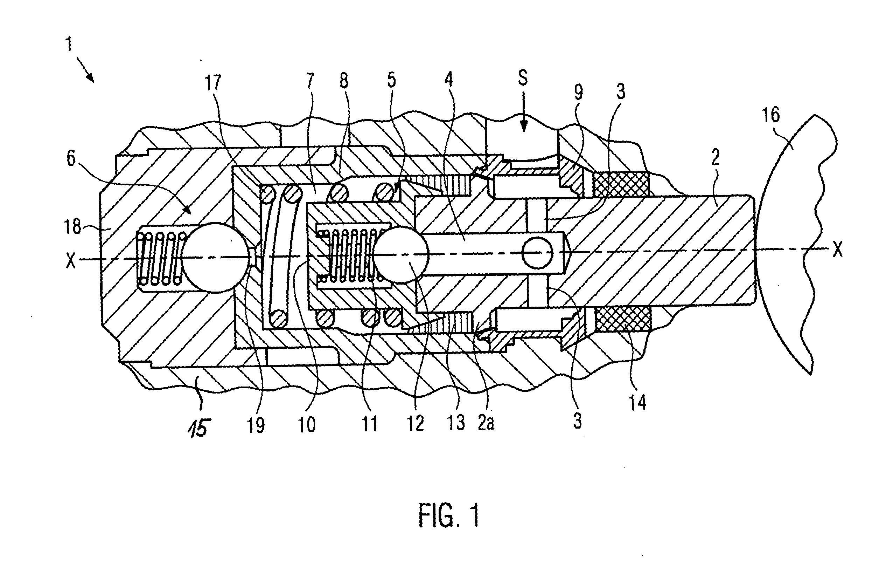

Nachfolgend wird unter Bezugnahme auf die Figuren 1 bis 5 eine Kolbenpumpe 1 gemäß einem Ausführungsbeispiel der Erfindung beschrieben.

Wie in Figur 1 gezeigt, weist die erfindungsgemäße Kolbenpumpe 1 einen Kolben 2 auf, welcher mehrere Querbohrungen 3 und eine Längsbohrung 4 aufweist. Die Querbohrungen 3 münden dabei in die Längsbohrung 4. Die Längsbohrung 4 ist mittels eines Einlassventils 5 verschlossen. Das Einlassventil 5 umfasst einen Käfig 10, eine Feder 11 und eine Kugel 12 zum Verschließen der Längsbohrung 4. Der Kolben 2 ist dabei in einem Zylinder 8 mittels eines Exzenterantriebs 16 in Axialrichtung X-X hin und her bewegbar.

Das Einlassventil 5 verschließt bzw. gibt eine Verbindung zwischen der Längsbohrung 4 und einem Druckraum 7 frei. Im Zylinder 8 ist eine Auslassbohrung 19 vorgesehen, welche mittels eines Auslassventils 6 freigebbar bzw. verschließbar ist. Eine Rückstellung des Kolbens 2 erfolgt mittels eines im Druckraum 7 angeordneten Rückstellelements 17. Ein Dichtelement 13 dichtet den Druckraum 7 gegen den Kolben 2 ab.

Am Kolben 2 ist ein nach außen gerichteter ringförmig vorstehender Absatz 2a gebildet, an welchem die Dichtung 13 abdichtet. An der zum Exzenterantrieb 16 gerichteten Seite ist ein weiteres Dichtelement 14 vorgesehen.

Wie aus Figur 1 ersichtlich ist, ist das Auslassventil 6 in einem Deckel 18 angeordnet. Die gesamte Kolbenpumpe 1 ist ihrerseits in einem Gehäuse 15 angeordnet. Hierbei ist es wichtig, dass die Kolbenpumpe 1 als vormontierte Baugruppe mit Deckel 18, Zylinder 8 und Kolben 2 handhabbar ist und nur in das Gehäuse 15 eingeschoben werden muss. Dies wird erfindungsgemäß durch das Filterelement 9 erreicht.

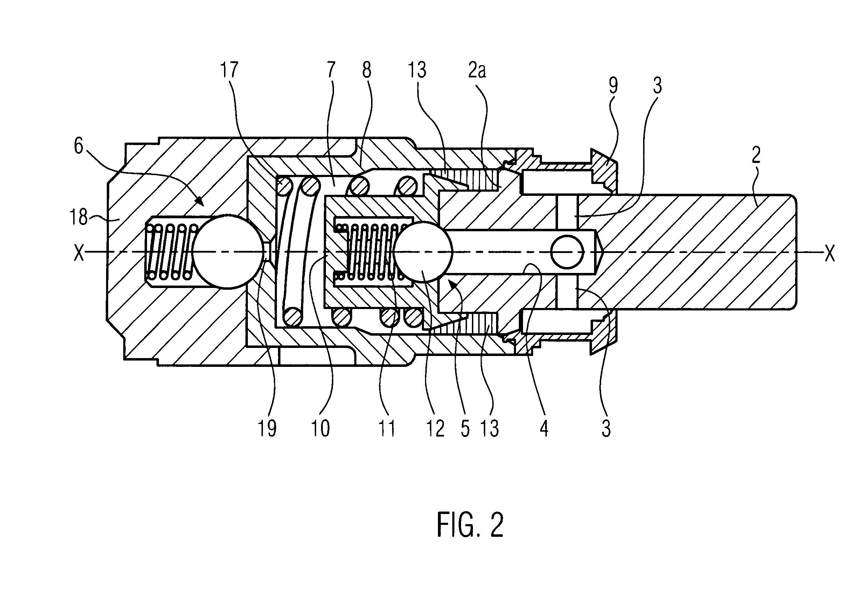

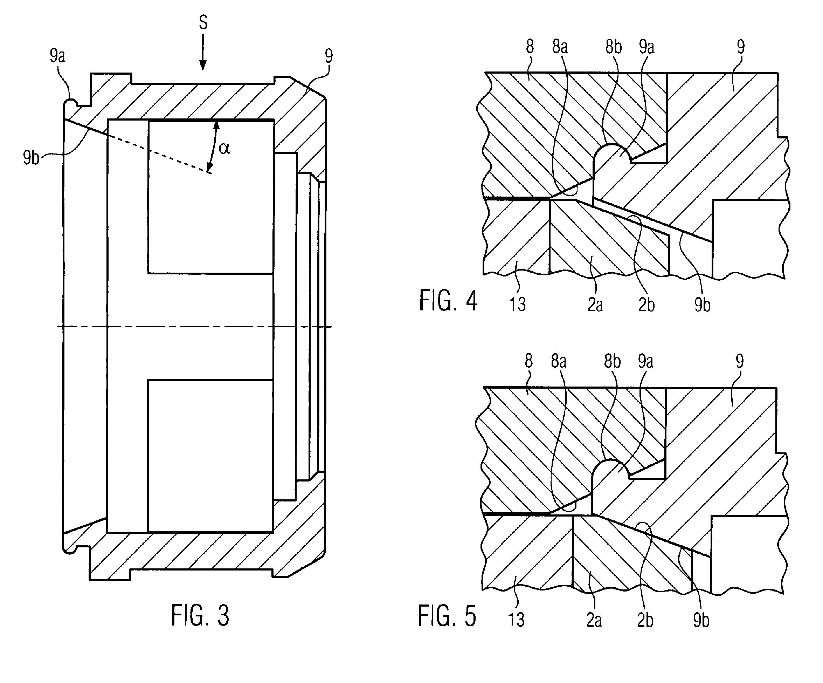

Figur 2 zeigt die Kolbenpumpe 1 als vormontierte Baugruppe, welche noch nicht in ein Gehäuse o. ä. eingebaut ist. Wie aus Figur 2 ersichtlich ist, drückt die Rückstellfeder 17 gegen den Käfig 10 und somit auf die dem Druckraum 7 zugewandte Stirnseite des Kolbens 2. Um zu verhindern, dass der Kolben 2 nach rechts herausgedrückt wird, ist am Filterelement 9 eine erste Auflaufschräge 9b ausgebildet. Dies ist insbesondere aus den Figuren 3 bis 5 ersichtlich. Die Auflaufschräge 9b ist dabei an einem Rastelement 9a angeordnet.

Am Kolben 2 ist am ringförmig vorstehenden Bereich 2a eine zweite Auflaufschräge 2b angeordnet. Wie aus den Figuren 4 und 5 ersichtlich ist, sind die beiden Auflaufschrägen 2b und 9b konisch ausgebildet.

Am Zylinder 8 ist weiterhin ein konischer Bereich 8a vorgesehen, in welchem eine Ausnehmung 8b gebildet ist. Die Ausnehmung 8b ist komplementär zum Rastelement 9a des Filterelements 9 gebildet. Im zusammengebauten Zustand der Kolbenpumpe ist das Rastelement 9a dabei in der Ausnehmung 8b aufgenommen und verbindet das Filterelement 9 mit dem Zylinder 8. Die Rastverbindung kann dabei durch den konischen Bereich 8a im Zylinder 8 besonders einfach montiert werden und ist auch wieder einfach lösbar. Beim Vormontieren der Kolbenpumpe 1 wird dabei das Filterelement 9 als letztes Bauteil eingefügt. Wenn das Filterelement 9 am Zylinder 8 verrastet ist, dient das Filterelement 9 als Schutz gegen ein Auseinanderfallen der vormontierten Baugruppe. Wie in den Figuren 2 und 5 gezeigt, drückt die Rückstellfeder 17 den Kolben 2 in Richtung nach rechts so lange, bis die zweite Auflaufschräge 2b am ringförmig vorstehenden Absatz 2a des Kolbens 2 mit dem ersten Auflaufbereich 9b am Filterelement 9 in Kontakt kommt (vgl... Figur 5). Das Filterelement 9 verhindert somit, dass der Kolben 2 durch die Rückstellfeder 17 weiter herausgedrückt wird, indem die beiden Auflaufschrägen 2b, 9b aufeinander aufgelaufen sind. Dieser Zustand ist in den Figuren 2 und 5 gezeigt. Somit kann das Filterelement 9 neben der Filterfunktion auch noch eine Funktion für das Zusammenhalten der Kolbenpumpe 1 als vormontierte Baugruppe bereitstellen. Durch die Ausbildung der beiden Auflaufschrägen 2b und 9b wird zusätzlich noch eine radial Kraft auf die Rastverbindung zwischen dem Filterelement 9 und dem Zylinder 8 ausgeübt, so dass die Rastverbindung zusätzlich noch über die Rückstellfeder 17 gesichert ist.

Wenn die Kolbenpumpe 1 in einem Gehäuse 15 o. ä. eingebaut ist, wie in den Figuren 1 und 4 gezeigt, wird die maximale Auslenkung des Kolbens durch das Exzenterelement 16 bestimmt. Diese Position im unteren Totpunkt ist in den Figuren 1 und 4 dargestellt. Dabei ist kleiner Abstand zwischen den beiden Auflaufschrägen 2b und 9b vorhanden, um zu verhindern, dass der ringförmig vorstehende Absatz 2a ständig gegen das Filterelement 9 schlägt.

Die Funktion der erfindungsgemäßen Kolbenpumpe 1 ist dabei wie folgt. In der Ansaugphase der Pumpe wird Fluid in radialer Richtung durch das Filterelement 9, wie in Figur 1 durch den Pfeil S angedeutet, in die Querbohrungen 3 angesaugt und über die Längsbohrung 4 in den Druckraum 7 zugeführt. Das Einlassventil 5 ist dabei in seiner geöffneten Position. Wenn der untere Totpunkt erreicht ist, kehrt sich die Bewegungsrichtung des Kolbens 2 um und das Einlassventil 5 wird durch den Druckaufbau im Druckraum 7 geschlossen. Diese Position ist in Figur 1 dargestellt. Der Kolben 2 wird somit wieder in Richtung des Auslassventils 6 bewegt, wobei sich der Druck im Druckraum 7 erhöht. Wenn der Druck im Druckraum größer als eine Federkraft des Auslassventils 6 ist, öffnet das Auslassventil 6 und unter Druck stehendes Fluid strömt durch die Auslassöffnung 19 durch das offene Auslassventil 6 ab. Wenn der Kolben 2 den oberen Totpunkt erreicht hat, kehrt sich die Bewegungsrichtung des Kolbens wieder um, so dass das Auslassventil 6 wieder geschlossen wird und das Einlassventil 5 wieder öffnet.

Die erfindungsgemäße Kolbenpumpe weist somit eine Selbstsicherung durch die Verbindung des Zylinders 8 mit dem Filterelement 9 an der Innenseite des Zylinders auf. Dadurch wird verhindert, dass die als Baugruppe vormontierte Kolbenpumpe vor einem endgültigen Einbau in ein Gehäuse auseinander fällt. Dadurch kann erfindungsgemäß die Teilezahl reduziert werden, da keine zusätzlichen Sicherungsringe o. ä. an der Kolbenpumpe vorzusehen sind. Eine Montage der Kolbenpumpe ist dabei besonders einfach. Ferner stellen die beiden Auflaufschrägen 2b und 9b eine zusätzliche Sicherung im vormontierten Zustand bereit.

Der Winkel α an dem Filterelement 9 beträgt ca. 20°. Da sich im Betrieb der Kolbenpumpe 1 die beiden Auflaufschrägen 2b und 9b nicht berühren, ist während des Betriebs somit keinerlei Belastung der Rastverbindung zwischen dem Filterelement 9 und dem Zylinder 8 gegeben. Somit weist das erfindungsgemäße Filterelement 9 neben der Filterfunktion auch noch eine Sicherungsfunktion gegen ein Auseinanderfallen der Baugruppe auf.

## Patentansprüche

1. Kolbenpumpe zur Förderung von Fluiden, umfassend einen Zylinder (8), einen im Zylinder (8) bewegbar angeordneten Kolben (2), ein zwischen dem Zylinder (8) und dem Kolben (2) in Zylinder (8) angeordnetes Rückstellelement (17) für den Kolben, einen Antrieb (16) für den Kolben sowie ein Filterelement (9), welches angesaugtes Fluid filtert, wobei das Filterelement (9) mit dem Zylinder (8) an einer zum Kolben (2) gerichteten Innenseite des Zylinders (8) verbunden ist, **dadurch gekennzeichnet,**
**dass** das Filterelement (9) eine erste Auflaufschräge (9b) aufweist, welche sich mit einer zweiten Auflaufschräge (2b) des Kolbens (2) in Kontakt befindet und dass die Anlaufschrägen (9b, 2b) auf Höhe der Verbindung des Filterelements (9) mit dem Zylinder (8) ausgebildet sind, wenn die Kolbenpumpe als eine Baugruppe vormontiert ist.

2. Kolbenpumpe nach Anspruch 1, **dadurch gekennzeichnet, dass** die erste Auflaufschräge (9b) des Filterelements (9) einen Winkel von 10° bis 30°, insbesondere 20° aufweist.

3. Filterelement nach Anspruch 1 oder 2, **dadurch gekennzeichnet, dass** die zweite Auflaufschräge (2b) des Kolbens (2) an einem ringförmigen, radial nach außen vorstehenden Absatz (2a) des Kolbens (2) angeordnet ist.

4. Kolbenpumpe nach Anspruch 4 3, **dadurch gekennzeichnet, dass** der ringförmige, radial nach außen vorstehende Absatz (2a) des Kolbens (2) eine Anlagefläche für eine Dichtung (13) aufweist.

5. Kolbenpumpe nach einem der vorherigen Ansprüche, **dadurch gekennzeichnet, dass** die Verbindung zwischen dem Zylinder (8) und dem Filterelement (9) als Rastverbindung (8b, 9a) ausgebildet ist.

6. Kolbenpumpe nach Anspruch 5, **dadurch gekennzeichnet, dass** an der Innenseite des Zylinders (8) eine Ausnehmung (8b) gebildet ist und am Filterelement (9) ein vorstehendes Rastelement (9a) gebildet ist.

7. Kolbenpumpe nach Anspruch 6, **dadurch gekennzeichnet, dass** die Ausnehmung (8b) des Zylinders (8) an einem sich verjüngenden, insbesondere konischen, Bereich (8a) des Zylinders (8) gebildet ist.

8. Bremsanlage für ein Fahrzeug, umfassend eine Kolbenpumpe (1) nach einem der vorhergehenden Ansprüche.

## Claims

1. Piston pump for the conveyance of fluids, comprising a cylinder (8), a piston (2) arranged movably in the cylinder (8), a return element (17) for the piston, the said return element being arranged between the cylinder (8) and the piston (2) in the cylinder (8), a drive (16) for the piston, and a filter element (9) which filters sucked-in fluid, the filter element (9) being connected to the cylinder (8) on an inner side of the cylinder (8) which is directed towards the piston (2), **characterized in that** the filter element (9) has a first run-on slope (9b) which is in contact with a second run-on slope (2b) of the piston (2), and **in that** the run-on slopes (9b, 2b) are formed level with the connection of the filter element (9) to the cylinder (8) when the piston pump is premounted as an assembly.

2. Piston pump according to Claim 1, **characterized in that** the first run-on slope (9b) of the filter element (9) has an angle of 10° to 30°, in particular 20°.

3. Filter element according to Claim 1 or 2, **characterized in that** the second run-on slope (2b) of the piston (2) is arranged on an annular, radially outward-projecting shoulder (2a) of the piston (2).

4. Piston pump according to Claim 3, **characterized in that** the annular, radially outward-projecting shoulder (2a) of the piston (2) has a bearing face for a seal (13).

5. Piston pump according to one of the preceding claims, **characterized in that** the connection between the cylinder (8) and the filter element (9) is designed as a latching connection (8b, 9a).

6. Piston pump according to Claim 5, **characterized in that** a recess (8b) is formed on the inside of the cylinder (8), and a projecting latching element (9a) is formed on the filter element (9).

7. Piston pump according to Claim 6, **characterized in that** the recess (8b) of the cylinder (8) is formed on a tapering, in particular conical region (8a) of the cylinder (8).

8. Brake system for a vehicle, comprising a piston pump (1) according to one of the preceding claims.

## Revendications

1. Pompe à piston pour refouler des fluides, comprenant un cylindre (8), un piston (2) disposé de manière mobile dans le cylindre (8), un élément de rappel (17) pour le piston, disposé entre le cylindre (8) et le piston (2) dans le cylindre (8), un entraînement (16) pour le piston ainsi qu'un élément de filtre (9), qui filtre le fluide aspiré, l'élément de filtre (9) étant connecté au cylindre (8) au niveau d'un côté intérieur du cylindre (8) orienté vers le piston (2),
**caractérisée en ce que**
l'élément de filtre (9) présente un premier biseau d'entrée (9b) qui est en contact avec un deuxième biseau d'entrée (2b) du piston (2), et **en ce que** les biseaux d'entrée (9b, 2b) sont réalisés à la hauteur de la connexion de l'élément de filtre (9) au cylindre (8), lorsque la pompe à piston est prémontée en tant que module.

2. Pompe à piston selon la revendication 1, **caractérisée en ce que** le premier biseau d'entrée (9b) de l'élément de filtre (9) présente un angle de 10° à 30°, notamment de 20°.

3. Elément de filtre selon la revendication 1 ou 2, **caractérisé en ce que** le deuxième biseau d'entrée (2b) du piston (2) est disposé sur un épaulement (2a) du piston (2) de forme annulaire, saillant radialement vers l'extérieur.

4. Pompe à piston selon la revendication 3, **caractérisée en ce que** l'épaulement (2a) du piston (2) de forme annulaire, saillant radialement vers l'extérieur, présente une surface d'appui pour un joint d'étanchéité (13).

5. Pompe à piston selon l'une quelconque des revendications précédentes, **caractérisée en ce que** la liaison entre le cylindre (8) et l'élément de filtre (9) est réalisée sous forme de connexion par encliquetage (8b, 9a).

6. Pompe à piston selon la revendication 5, **caractérisée en ce qu'**un évidement (8b) est formé sur le côté intérieur du cylindre (8), et un élément d'encliquetage (9a) saillant est formé sur l'élément de filtre (9).

7. Pompe à piston selon la revendication 6, **caractérisée en ce que** l'évidement (8b) du cylindre (8) est formé sur une région (8a) du cylindre (8) se rétrécissant, notamment de forme conique.

8. Installation de freinage pour un véhicule, comprenant une pompe à piston (1) selon l'une quelconque des revendications précédentes.
